# EUROPEAN PATENT SPECIFICATION

(11) **EP 3 123 791 B1**
(45) Date of publication and mention of the grant of the patent: **12.09.2018**
(21) Application number: 15715113.5
(22) Date of filing: 27.03.2015
(51) Int. Cl.: H04W 72/04, H04W 72/08, H04W 88/06, H04W 52/02

(54) **OPTIMIZING RESOURCE USAGE BASED ON CHANNEL CONDITIONS AND POWER CONSUMPTION**
OPTIMIERUNG DER RESSOURCENNUTZUNG AUF DER BASIS VON KANALBEDINGUNGEN UND ENERGIEVERBRAUCH
OPTIMISATION D'UTILISATION DE RESSOURCES D'APRÈS DES CONDITIONS DE VOIE ET UNE CONSOMMATION D'ÉNERGIE

(30) Priority: 28.03.2014 US 201414229662
(43) Date of publication of application: 01.02.2017
(73) Proprietor: Qualcomm Incorporated, San Diego, CA 92121-1714 (US)
(72) Inventor: YAVUZ, Mehmet, San Diego, CA 92121-1714 (US); PATEL, Chirag, Sureshbhai, San Diego, CA 92121-1714 (US); KADOUS, Tamer, Adel, San Diego, CA 92121-1714 (US); CHANDE, Vinay, San Diego, CA 92121-1714 (US)
(74) Representative: Dunlop, Hugh Christopher
(86) International application number: PCT/US2015/023152
(87) International publication number: WO 2015/149012

(56) References cited:
- WO-A1-2013/140243
- WO-A2-02/30089
- WO-A2-2010/105210
- WO-A2-2013/005105
- US-A1- 2012 276 909
- US-A1- 2013 045 744
- US-A1- 2013 077 507
- US-A1- 2013 143 494

## Description

### BACKGROUND

This application is directed to wireless communications systems, and more particularly to methods and apparatuses for optimizing resource usage based on channel conditions and power consumption.

A wireless network may be deployed over a defined geographical area to provide various types of services (e.g., voice, data, multimedia services, etc.) to users within that geographical area. The wireless communication network may include a number of base stations that can support communication for a number of user equipments (UEs). A UE may communicate with a base station via the downlink and uplink.

The 3rd Generation Partnership Project (3GPP) Long Term Evolution (LTE) advanced cellular technology is an evolution of Global System for Mobile communications (GSM) and Universal Mobile Telecommunications System (UMTS). The LTE physical layer (PHY) provides a highly efficient way to convey both data and control information between base stations, such as an evolved Node Bs (eNBs), and mobile entities, such as UEs. In prior applications, a method for facilitating high bandwidth communication for multimedia has been single frequency network (SFN) operation. SFNs utilize radio transmitters, such as, for example, eNBs, to communicate with subscriber UEs.

Some mobile devices are compatible with more than one radio access technology (RAT). For example, a mobile device may be connected to a local area network (LAN) using two antennas via a Wi-Fi base station while simultaneously connected to a wide area network (WAN) using two different antennas via a LTE base station. In some situations, it is possible for the mobile device to experience a better connection on a first RAT over a second RAT.

Femtocells are small, lower-power base stations that often operate in a home or business. For example, a user of a mobile device served by a macro base station may switch to service by a femtocell when in proximity of the user's home femtocell. In some situations, a mobile device served by a femtocell, because of shorter transmission distance between the femtocell and the mobile device, often enjoys a high signal to noise ratio (SINR) and more reliable communication.

Mobile devices such as mobile phones are often powered by internal batteries. As such, battery capacity and power consumption are major limitations in the operational capacity of a mobile device. Existing techniques for extending battery life include reducing the internal clock cycling of the microprocessor of the mobile device, entering a sleep mode if the mobile device is inactive for a predetermined period of time, and using more efficient power amplifiers. Mobile devices may include one or more power chains that operate transmit and receive antennas for communicating with a serving base station. The power chains operating such antennas consume a significant amount power. In this context, there remains a need for improved techniques for optimizing resource usage to improve data throughput or decrease power consumption.

Prior art document US 2013/045744 A1 describes a device that switches between two different radio access technologies in order to optimise power efficiency and interference mitigation. However, the device does not communicate concurrently with the different radio access technologies.

### SUMMARY

The following presents a simplified summary of one or more examples in order to provide a basic understanding of such examples. This summary is not an extensive overview of all contemplated examples, and is intended to neither identify key or critical elements of all examples nor delineate the scope of any or all examples. Its sole purpose is to present some concepts of one or more examples in a simplified form as a prelude to the more detailed description that is presented later.

In accordance with one or more aspects of the examples described herein, there is provided a device and method for optimizing resource usage based on channel conditions and power consumption. In one example, a network entity may detect a first channel condition for a first radio access technology (RAT) used by the network entity, detect a second channel condition for a second RAT used by the network entity. The network entity may determine whether the first channel condition comprises a higher interference level than the second channel condition and also determine power consumption constraints. The network entity may reassign at least one antenna from the first RAT to the second RAT based at least in part on the power consumption constraints, in response to determining that the first channel condition comprises a higher interference level than the second channel condition, as described in the independent claims.

### BRIEF DESCRIPTION OF THE DRAWINGS

These and other sample aspects of the disclosure will be described in the detailed description and the appended claims that follow, and in the accompanying drawings, wherein:
FIG. 1A is an illustration of an example wireless communication network;
FIG. 1B is a block diagram illustrating an example of a communication system for optimizing resource usage based on channel conditions and power consumption;
FIG. 1C is a block diagram illustrating an example of a second communication system for optimizing resource usage based on channel conditions and power consumption;
FIG. 2 is a block diagram illustrating an example of communication system components;
FIG. 3 illustrates an example of a methodology for optimizing resource usage based on channel conditions and power consumption;
FIG. 4 shows an example of an apparatus for optimizing resource usage in accordance with the methodology of FIG. 3;
FIG. 5 illustrates an example of a methodology for optimizing resource usage based on channel conditions and power consumption; and
FIG. 6 shows an example of an apparatus for optimizing resource usage in accordance with the methodology of FIG. 5.

### DETAILED DESCRIPTION

Techniques for optimizing resource usage based on channel conditions and power consumption are described herein. The subject disclosure provides a technique for improving service and increasing battery life for mobile devices. For communications between wireless network entities, the technique optimizes resource usage to increase data rates (or throughput) or decrease power consumption based on channel conditions and power consumption. There are also situations when a mobile device (e.g., user equipment (UE), access terminal, etc.) may simultaneously access two or more different radio access technologies (RAT), but is experiencing a better connection on one particular RAT. Resources may be allocated to focus on the RAT with a better connection for greater data throughput. Resources may be further optimized based on a determination of whether a serving base station is a small cell or large cell base station.

In the subject disclosure, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

The techniques may be used for various wireless communication networks such as wireless wide area networks (WWANs) and wireless local area networks (WLANs). The terms "network" and "system" are often used interchangeably. The WWANs may be code division multiple access (CDMA), time division multiple access (TDMA), frequency division multiple access (FDMA), orthogonal frequency-division multiple access (OFDMA), single carrier frequency division multiple access (SC-FDMA) and/or other networks. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) and LTE-Advanced (LTE-A) are new releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). A WLAN may implement a radio technology such as IEEE 802.11 (Wi-Fi), Hiperlan, etc.

As used herein, the downlink (or forward link) refers to the communication link from the base station to the UE, and the uplink (or reverse link) refers to the communication link from the UE to the base station. A base station may be, or may include, a macrocell or microcell. Microcells (e.g., picocells, femtocells, home nodeBs, small cells, and small cell base stations) are characterized by having generally much lower transmit power than macrocells, and may often be deployed without central planning. In contrast, macrocells are typically installed at fixed locations as part of a planned network infrastructure, and cover relatively large areas.

The techniques described herein may be used for the wireless networks and radio technologies mentioned above as well as other wireless networks and radio technologies. For clarity, certain aspects of the techniques are described below for 3GPP network and WLAN, and LTE and WLAN terminology is used in much of the description below.

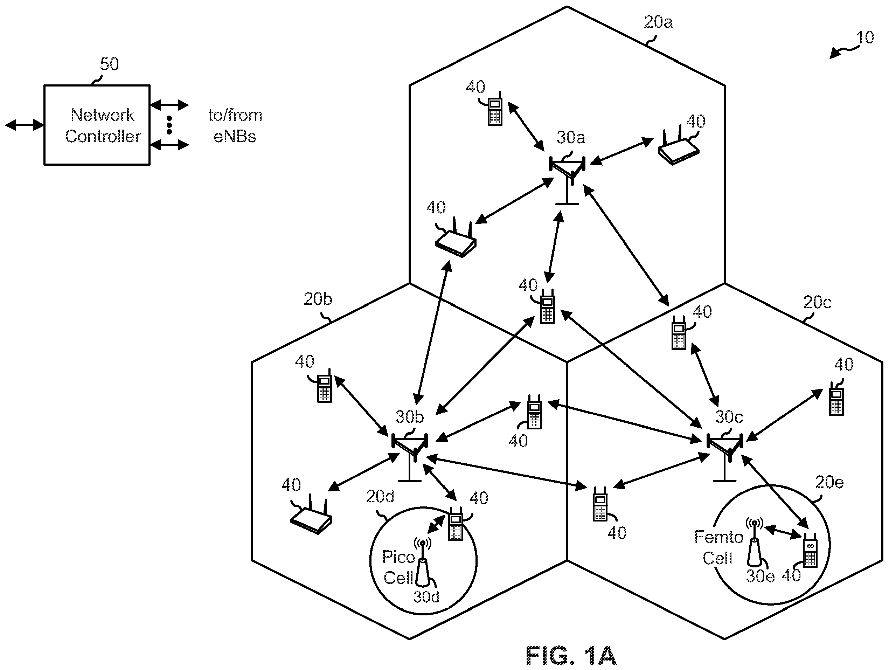

FIG. 1A is an illustration of an example wireless communication network 10, which may be an LTE network or some other wireless network. Wireless network 10 may include a number of evolved Node Bs (eNBs) 30 and other network entities. An eNB may be an entity that communicates with mobile entities and may also be referred to as a base station, a Node B, an access point, etc. Although the eNB typically has more functionalities than a base station, the terms "eNB" and "base station" are used interchangeably herein. Each eNB 30 may provide communication coverage for a particular geographic area and may support communication for mobile entities located within the coverage area. To improve network capacity, the overall coverage area of an eNB may be partitioned into multiple (e.g., three) smaller areas. Each smaller area may be served by a respective eNB subsystem. In 3GPP, the term "cell" can refer to the smallest coverage area of an eNB and/or an eNB subsystem serving this coverage area, depending on the context in which the term is used.

An eNB may provide communication coverage for a macrocell, a picocell, a femtocell, and/or other types of cell. A macrocell may cover a relatively large geographic area (e.g., several kilometers in radius) and may allow unrestricted access by UEs with service subscription. A picocell may cover a relatively small geographic area and may allow unrestricted access by UEs with service subscription. A femtocell may cover a relatively small geographic area (e.g., a home) and may allow restricted access by UEs having association with the femtocell (e.g., UEs in a Closed Subscriber Group (CSG)). In the example shown in FIG. 1A, eNBs 30a, 30b, and 30c may be macro eNBs for macrocell groups 20a, 20b, and 20c, respectively. Each of the cell groups 20a, 20b, and 20c may include a plurality (e.g., three) of cells or sectors. An eNB 30d may be a pico eNB for a picocell 20d. An eNB 30e may be a femto eNB, femtocell base station, or femto access point (FAP) for a femtocell 20e.

Wireless network 10 may also include relays (not shown in FIG. 1A). A relay may be an entity that can receive a transmission of data from an upstream station (e.g., an eNB or a UE) and send a transmission of the data to a downstream station (e.g., a UE or an eNB). A relay may also be a UE that can relay transmissions for other UEs.

A network controller 50 may couple to a set of eNBs and may provide coordination and control for these eNBs. Network controller 50 may be a single network entity or a collection of network entities. Network controller 50 may communicate with the eNBs via a backhaul. The eNBs may also communicate with one another, e.g., directly or indirectly via a wireless or wireline backhaul.

UEs 40 may be dispersed throughout wireless network 10, and each UE may be stationary or mobile. A UE may also be referred to as a mobile station, a terminal, an access terminal, a subscriber unit, a station, etc. A UE may be a cellular phone, a personal digital assistant (PDA), a wireless modem, a wireless communication device, a handheld device, a laptop computer, a cordless phone, a wireless local loop (WLL) station, a smart phone, a netbook, a smartbook, etc. A UE may be able to communicate with eNBs, relays, etc. A UE may also be able to communicate peer-to-peer (P2P) with other UEs.

Wireless network 10 may support operation on a single carrier or multiple carriers for each of the downlink (DL) and uplink (UL). A carrier may refer to a range of frequencies used for communication and may be associated with certain characteristics. Operation on multiple carriers may also be referred to as multi-carrier operation or carrier aggregation. A UE may operate on one or more carriers for the DL (or DL carriers) and one or more carriers for the UL (or UL carriers) for communication with an eNB. The eNB may send data and control information on one or more DL carriers to the UE. The UE may send data and control information on one or more UL carriers to the eNB. In one design, the DL carriers may be paired with the UL carriers. In this design, control information to support data transmission on a given DL carrier may be sent on that DL carrier and an associated UL carrier. Similarly, control information to support data transmission on a given UL carrier may be sent on that UL carrier and an associated DL carrier. In another design, cross-carrier control may be supported. In this design, control information to support data transmission on a given DL carrier may be sent on another DL carrier (e.g., a base carrier) instead of the DL carrier.

Carrier aggregation allows expansion of effective bandwidth delivered to a user terminal through concurrent use of radio resources across multiple carriers. When carriers are aggregated, each carrier is referred to as a component carrier. Multiple component carriers are aggregated to form a larger overall transmission bandwidth. Two or more component carriers can be aggregated to support wider transmission bandwidths.

Wireless network 10 may support carrier extension for a given carrier. For carrier extension, different system bandwidths may be supported for different UEs on a carrier. For example, the wireless network may support (i) a first system bandwidth on a DL carrier for first UEs (e.g., UEs supporting LTE Release 8 or 9 or some other release) and (ii) a second system bandwidth on the DL carrier for second UEs (e.g., UEs supporting a later LTE release). The second system bandwidth may completely or partially overlap the first system bandwidth. For example, the second system bandwidth may include the first system bandwidth and additional bandwidth at one or both ends of the first system bandwidth. The additional system bandwidth may be used to send data and possibly control information to the second UEs.

Wireless network 10 may support data transmission via single-input single-output (SISO), single-input multiple-output (SIMO), multiple-input single-output (MISO), or MIMO. For MIMO, a transmitter (e.g., an eNB) may transmit data from multiple transmit antennas to multiple receive antennas at a receiver (e.g., a UE). MIMO may be used to improve reliability (e.g., by transmitting the same data from different antennas) and/or to improve throughput (e.g., by transmitting different data from different antennas).

Wireless network 10 may support single-user (SU) MIMO, multi-user (MU) MIMO, Coordinated Multi-Point (CoMP), etc. For SU-MIMO, a cell may transmit multiple data streams to a single UE on a given time-frequency resource with or without precoding. For MU-MIMO, a cell may transmit multiple data streams to multiple UEs (e.g., one data stream to each UE) on the same time-frequency resource with or without precoding. CoMP may include cooperative transmission and/or joint processing. For cooperative transmission, multiple cells may transmit one or more data streams to a single UE on a given time-frequency resource such that the data transmission is steered toward the intended UE and/or away from one or more interfered UEs. For joint processing, multiple cells may transmit multiple data streams to multiple UEs (e.g., one data stream to each UE) on the same time-frequency resource with or without precoding.

Wireless network 10 may support hybrid automatic retransmission (HARQ) in order to improve reliability of data transmission. For HARQ, a transmitter (e.g., an eNB) may send a transmission of a data packet (or transport block) and may send one or more additional transmissions, if needed, until the packet is decoded correctly by a receiver (e.g., a UE), or the maximum number of transmissions has been sent, or some other termination condition is encountered. The transmitter may thus send a variable number of transmissions of the packet.

Wireless network 10 may support synchronous or asynchronous operation. For synchronous operation, the eNBs may have similar frame timing, and transmissions from different eNBs may be approximately aligned in time. For asynchronous operation, the eNBs may have different frame timing, and transmissions from different eNBs may not be aligned in time.

Wireless network 10 may utilize frequency division duplex (FDD) or time division duplex (TDD). For FDD, the DL and UL may be allocated separate frequency channels, and DL transmissions and UL transmissions may be sent concurrently on the two frequency channels. For TDD, the DL and UL may share the same frequency channel, and DL and UL transmissions may be sent on the same frequency channel in different time periods.

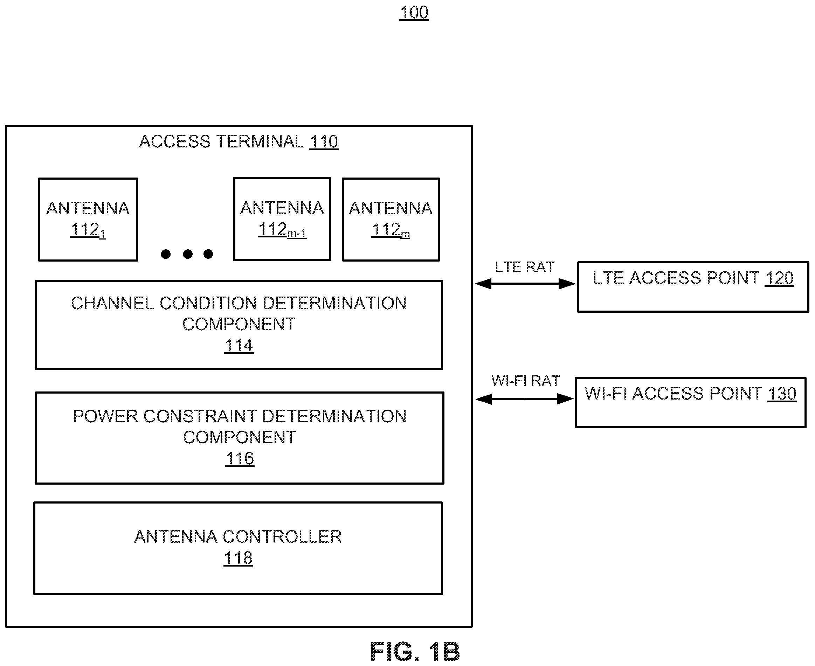

FIG. 1B illustrates an example wireless communication scenario between a network entity (e.g. an access terminal 110) and one or more other network entities (e.g. a LTE access point 120 and a Wi-Fi access point 130). For illustration purposes, various aspects of the disclosure will be described in the context of one or more access terminals, access points, and network entities that communicate with one another. It should be appreciated, however, that the teachings herein may be applicable to other types of apparatuses or other similar apparatuses that are referenced using other terminology. For example, in various examples access points may be referred to or implemented as base stations, NodeBs, eNodeBs, femtocells, macrocells, and so on, while access terminals may be referred to or implemented as user equipment (UEs), mobile stations, and so on. It should also be appreciated that system 100, access terminal 110, and access point 120 can include additional components not shown in FIG. 1B.

The LTE access point 120 or Wi-Fi access point 130 in the system 100 may provide access to one or more services (e.g., network connectivity) for one or more wireless terminals (e.g., access terminal, UE, mobile entity, mobile device) 110. For example, a LTE access point may communicate with one or more network entities (not shown) to facilitate wide area network connectivity. Such network entities may take various forms such as, for example, one or more radio and/or core network entities.

In various examples, the network entities may be responsible for or otherwise be involved with handling: network management (e.g., via an operation, administration, management, and provisioning entity), call control, session management, mobility management, gateway functions, interworking functions, or some other suitable network functionality. In a related aspect, mobility management may relate to or involve: keeping track of the current location of access terminals through the use of tracking areas, location areas, routing areas, or some other suitable technique; controlling paging for access terminals; and providing access control for access terminals. Also, two of more of these network entities may be co-located and/or two or more of such network entities may be distributed throughout a network.

The access terminal 110 may support communication via a plurality of RATs. The access terminal 110 may support concurrent connectivity via more than one RAT. For example, the access terminal 110 may support Bluetooth, Wi-Fi, and LTE RATs. The aspect access terminal 110 may be concurrently connected to the LTE access point 120 via LTE RAT and the Wi-Fi access point 130 via Wi-Fi RAT.

The access terminal 110 may include one or more antennas 112₁-112ₘ. Each antenna 112 may be used as a transmit (Tx) antenna or receive (Rx) antenna. In an example aspect, the access terminal 110 may include four antennas 112. The access terminal 110 may connect to the LTE access point 120 via LTE RAT using 2 antennas 112₁, 112₂ and connect to the Wi-Fi access point 130 via Wi-Fi RAT using 2 other antennas 112₃, 112₄.

The access terminal 110 may comprise a channel condition determination component 114. The channel condition determination component 114 may determine channel conditions of communication channels between the access terminal 110 and other network entities such as the LTE access point 120 and the Wi-Fi access point 130. The channel condition determination component may determine at least one of an uplink channel condition or a downlink channel condition. For example, in a time division duplex system, the channel condition determination component 114 may determine an uplink channel condition and a downlink channel condition. In another example, in a frequency division duplex system, the channel condition determination component 114 may determine a downlink channel condition and use feedback from an access point to determine an uplink channel condition.

In a system with a plurality of RATs (e.g., system 100), but is experiencing a better connection on one particular RAT, channel condition determination component 114 may help optimize resource usage (i.e., increasing throughput, decreasing power consumption, or a combination thereof) by comparing signal qualities of the different RATs. For example, the channel condition determination component 114 may determine that a first channel condition, for communications with the LTE access point 120 via LTE RAT, has a high signal quality (i.e. determined by, for example, signal-to-noise ratio [SNR], bit error rate [BER], negative acknowledgement [NAK], or any other suitable factors). In addition, channel condition determination component 114 may determine that a second channel condition, for communications with the Wi-Fi access point 130 via Wi-Fi RAT, has a low signal quality. As a result, the access terminal 110 may prefer the LTE RAT over the Wi-Fi RAT due to signal quality differences. Consequently, if the access terminal 110 reduces an amount of data sent over the Wi-Fi RAT, the antennas 112₃, 112₄ assigned to the Wi-Fi RAT will receive less use.

In some embodiments, the access terminal 110 may comprise a power constraint determination component 116 that may determine power consumption constraints. Power consumption constraints may include any suitable factor such as, for instance, current battery level, antenna power amplifier capabilities, or any combination thereof. For example, the power constraint determination component 116 may determine that a first Tx chain has a higher power amplifier capability and a second Tx chain has a lower power amplifier capability.

The access terminal 110 may comprise an antenna controller 118. It should be understood that, in some embodiments, the antenna controller 118 may receive instructions for antenna control from another component in the access terminal 110 or from another network entity.

The antenna controller 118 may determine which antennas are currently used by a first RAT and which antennas are currently used by a second RAT. For example, the antenna controller 118 may determine that the LTE RAT is using antennas 112₁, 112₂ and the Wi-Fi RAT is using antennas 112₃, 112₄. The antenna controller 118 may then reassign antennas for use by a different RAT based on a comparison of channel conditions. This reassignment of the antennas may significantly increase total data rates (or throughput) for the access terminal 110.

For example, if a first channel condition for a first RAT is better than a second channel condition for a second RAT, the antenna controller 118 may reassign antennas currently used by the first RAT for use by the second RAT. For the system shown in FIG. 1B, for instance, the antenna controller 118 may determine that the channel for the LTE RAT is experiencing better signal quality than the channel for the Wi-Fi RAT, and in response determine to reassign antennas 112₃, 112₄ from the Wi-Fi RAT to the LTE RAT.

The reassignment of antennas may further be based on the power consumption constraints. In an example implementation, the antenna controller 118 may reassign a number of antennas based on the current battery level (e.g., energy level) and antenna power amplifier capabilities. If the current battery level is low, the antenna controller 118 may reassign antennas to minimize power consumption by the antennas. In another example, if the current battery level is high, the antenna controller 118 may reassign antennas to maximize throughput.

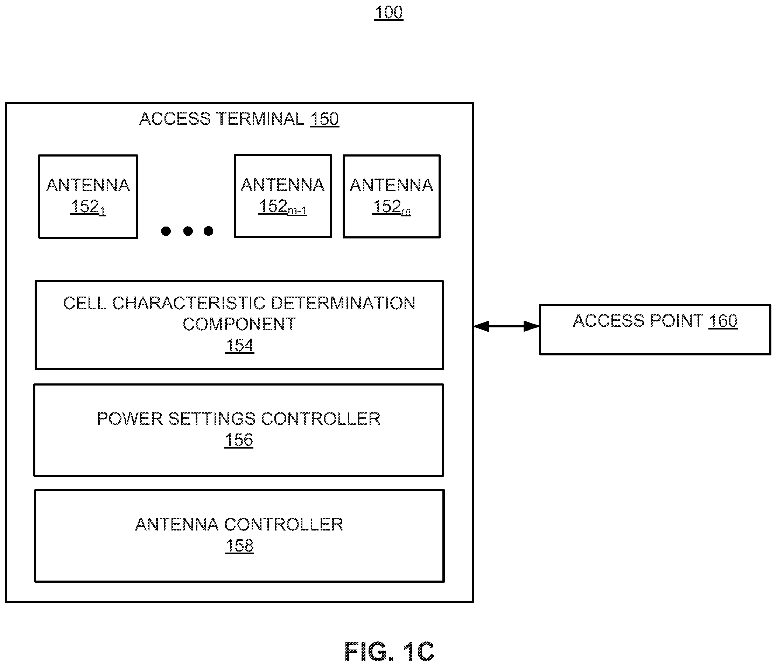

In some embodiments, one or more components of an access terminal may optimize resource usage based on whether a serving access point is a large cell or a small cell. FIG. 1C illustrates an example wireless communication scenario between a network entity (e.g. an access terminal 150) and an access point 160. The access point 160 may be a large cell (also known as a macrocell or a macrocell base station) or a small cell (also known as a microcell or microcell base station). Microcells (e.g., picocells, femtocells, home nodeBs) are characterized by having generally much lower transmit power than macrocells, and may often be deployed without central planning. In contrast, macrocells are typically installed at fixed locations as part of a planned network infrastructure, and cover relatively large areas. Microcells may often serve access terminals at much shorter distances than would macrocells. The shorter distance between a microcell and an access terminal may provide better channel conditions (e.g. as measured by SNR, BER, or NAK) than a macrocell. Access terminal 150 may be the same as or similar to the access terminal 110 of FIG. 1B.

As shown in FIG. 1C, the access terminal 150 may include a cell characteristic determination component 154. However, persons skilled in the art will appreciate that the cell characteristic determination component 154 may be included in another network entity. The cell characteristic determination component 154 may determine whether the access point 160 is a large cell or a small cell. For example, the cell characteristic determination component 154 may receive, directly or indirectly, information, over-the-air or through a backhaul network, that may help identify whether the access point 160 is a large cell or a small cell.

The access terminal 150 may include a power settings controller 156. The power settings controller 156 may determine a power setting (e.g. determining settings of a power amplifier [PA], automatic gain controller [AGC], analog-to-digital converter [ADC], digital-to-analog [DAC] converter set-point, any other suitable component, or any combination thereof), based at least in part on whether the access point 160 is a large cell or a small cell. For example, the power settings controller 156 may determine a power setting that conserves power drain if the access point 160 is a small cell, due to the assumption of better channel conditions between the access terminal 150 and the small cell access point 160 In some implementations, the power settings controller 156 may adjust a PA, an AGC, an ADC, a DAC, or any other suitable component, to a determined setting.

The access terminal 150 may include one or more antennas 152₁-152ₘ and an antenna controller 158. A portion of the antennas 152₁-152ₘ may be high power amplifier capability antennas which drain more power, while another portion may be lower power amplifier capability antennas which drain less power. For example, because of the assumed shorter distances and better channel conditions between a small cell assess point and an access terminal, lower power amplifier capability antennas may be sufficient. Switching to the lower power amplifier capability antennas from higher power amplifier capability antennas may increase battery life and reduce interference caused by the access terminal. In contrast, because of the assumed longer distances and worse channel conditions between a large cell assess point and an access terminal, higher power amplifier capability antennas may be needed.

Thus, for the system shown in FIG. 1C, if it is determined that the access point 160 is a small cell, the antenna controller 158 may determine to switch to using a lower power amplifier capability antenna from a higher power amplifier capability antenna for communication with the small cell access point 160. On the other hand, if it is determined that the access point 160 is a large cell, the antenna controller 158 may determine to switch to using a higher power amplifier capability antenna from a lower power amplifier capability antenna for communication with the large cell access point 160.

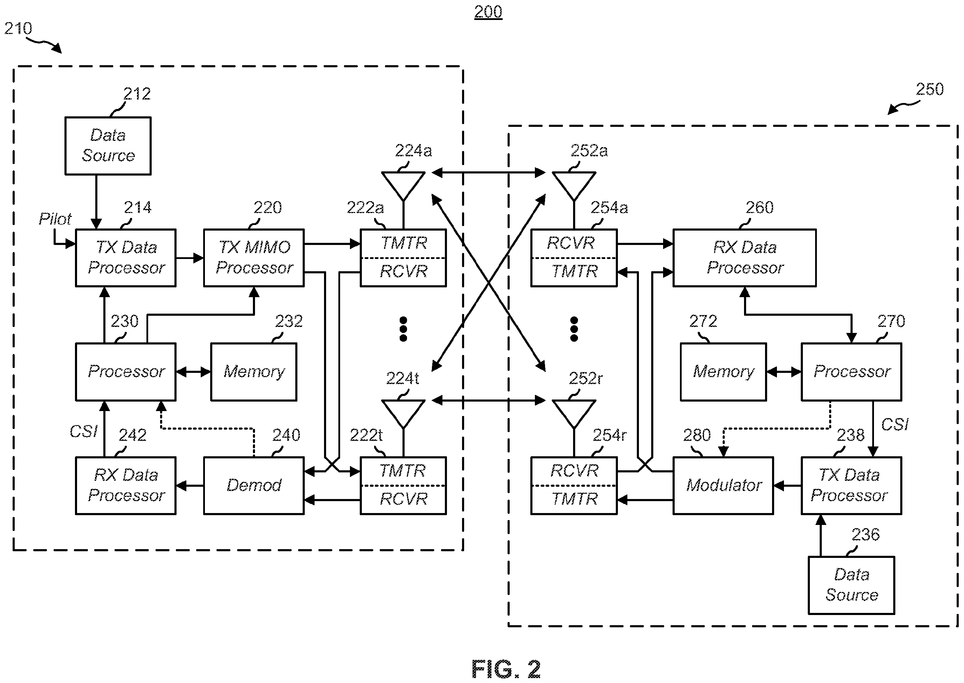

FIG. 2 illustrates a system 200 including a transmitter system 210 (also known as the access point, base station, or eNB) and a receiver system 250 (also known as access terminal, mobile device, or UE) in an LTE MIMO system 200. In the present disclosure, the transmitter system 210 may correspond to a WS-enabled eNB or the like, whereas the receiver system 250 may correspond to a WS-enabled UE or the like.

At the transmitter system 210, traffic data for a number of data streams is provided from a data source 212 to a transmit (TX) data processor 214. Each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides N_{T} modulation symbol streams to N_{T} transmitters (TMTR) 222a through 222t. In certain examples, TX MIMO processor 220 applies beam-forming weights to the symbols of the data streams and to the antenna from which the symbol is being transmitted.

Each transmitter 222 receives and processes a respective symbol stream to provide one or more analog signals, and further conditions (e.g., amplifies, filters, and up-converts) the analog signals to provide a modulated signal suitable for transmission over the MIMO channel. N_{T} modulated signals from transmitters 222a through 222t are then transmitted from N_{T} antennas 224a through 224t, respectively.

At receiver system 250, the transmitted modulated signals are received by N_{R} antennas 252a through 252r and the received signal from each antenna 252 is provided to a respective receiver (RCVR) 254a through 254r. Each receiver 254 conditions (e.g., filters, amplifies, and down-converts) a respective received signal, digitizes the conditioned signal to provide samples, and further processes the samples to provide a corresponding "received" symbol stream.

An RX data processor 260 then receives and processes the N_{R} received symbol streams from N_{R} receivers 254 based on a particular receiver processing technique to provide N_{T} "detected" symbol streams. The RX data processor 260 then demodulates, de-interleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion. The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beam-forming weights then processes the extracted message.

As used herein, an access point may comprise, be implemented as, or known as a NodeB, an eNodeB, a radio network controller (RNC), a base station (BS), a radio base station (RBS), a base station controller (BSC), a base transceiver station (BTS), a transceiver function (TF), a radio transceiver, a radio access point, a basic service set (BSS), an extended service set (ESS), a macrocell, a macro node, a Home eNB (HeNB), a femtocell, a femto node, a pico node, or some other similar terminology.

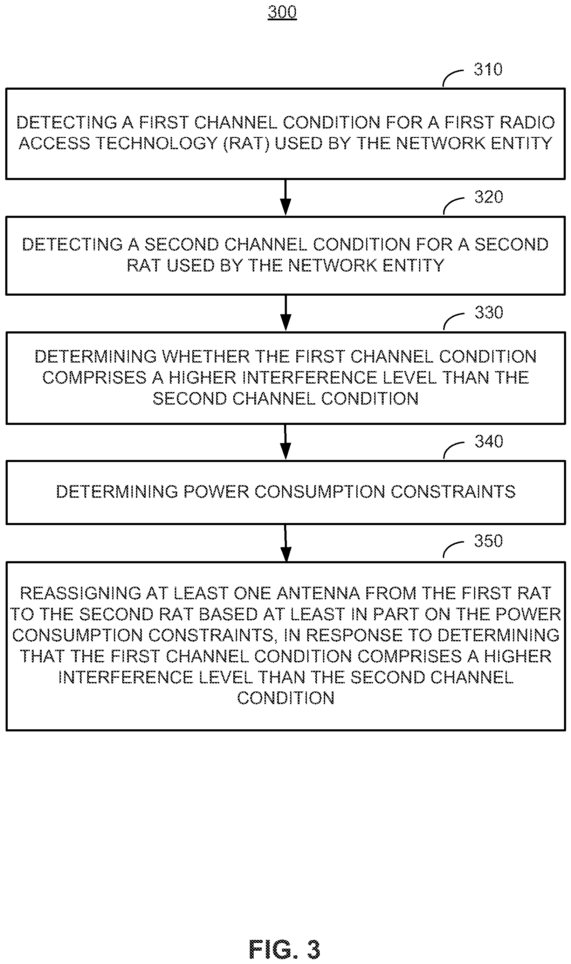

In accordance with one or more aspects of the examples described herein, with reference to FIG. 3, there is shown a methodology 300 for optimizing resource usage based on channel conditions and power consumption. The method may be operable, such as, for example, by the access terminal 110, as shown in FIG. 1B, or the like.

The method 300 may involve, at 310 detecting a first channel condition for a first RAT used by a network entity (e.g., access terminal 110 of FIG. 1B). The first RAT may be a LTE RAT used by an LTE access point 120, as shown in FIG. 1B. In a related aspect, the channel condition determination component 114 may detect the first channel condition for the LTE RAT, as shown in FIG. 1B.

The method 300 may involve, at 320, detecting a second channel condition for a second RAT used by the network entity. In an example implementation, the second RAT is a Wi-Fi RAT used by a Wi-Fi access point 130 as shown in FIG. 1B. In a related aspect, the channel condition determination component 114 may detect the second channel condition for the Wi-Fi RAT, as shown in FIG. 1B.

The method 300 may involve, at 330, determine whether the first channel condition comprises a higher interference level than the second channel condition. In an example aspect, the channel condition determination computer 114 may compare the first channel condition to the second channel condition, as shown in FIG. 1B.

The method 300 may involve, at 340, determining power consumption constraints. In an example implementation, the power constraint determination component 116 may determine a current battery level or power amplifier capabilities of the antennas 112.

The method 300 may involve, at 350, reassigning at least one antenna from the first RAT to the second RAT based at least in part on the power consumption constraints, in response to determining that the first channel condition comprises a higher interference level than the second channel condition. In an example implementation, the antenna controller 118 may reassign a number of antennas 112 currently used by the LTE RAT for use by the Wi-Fi RAT, as shown in FIG. 1B.

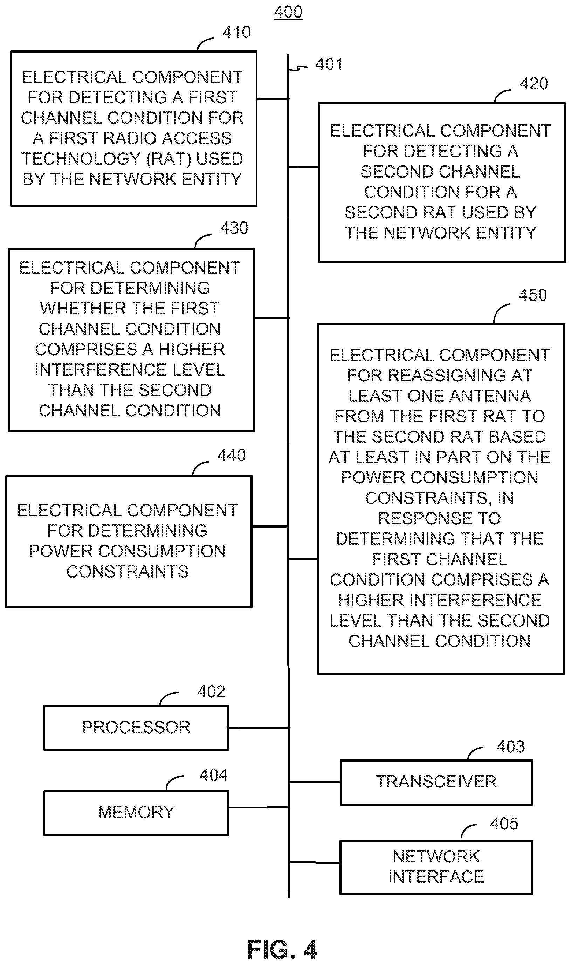

In accordance with one or more aspects of the examples described herein, FIG. 4 shows an example of an apparatus for optimizing resource usage based on channel conditions and power consumption, in accordance with the methodology of FIG. 3. The exemplary apparatus 400 may be configured as a computing device or as a processor or similar device/component for use within. In one example, the apparatus 400 may include functional blocks that can represent functions implemented by a processor, software, or combination thereof (e.g., firmware). In another example, the apparatus 400 may be a system on a chip (SoC) or similar integrated circuit (IC).

In one example, apparatus 400 may include an electrical component or module 410 for detecting a first channel condition for a first radio access technology (RAT) used by the network entity.

The apparatus 400 may include an electrical component 420 for detecting a second channel condition for a second RAT used by the network entity.

The apparatus 400 may include an electrical component 430 for determine whether the first channel condition comprises a higher interference level than the second channel condition.

The apparatus 400 may include an electrical component 440 for determining power consumption constraints.

The apparatus 400 may include an electrical component 450 for reassigning at least one antenna from the first RAT to the second RAT based at least in part on the power consumption constraints, in response to determining that the first channel condition comprises a higher interference level than the second channel condition.

In further related aspects, the apparatus 400 may optionally include a processor component 402. The processor 402 may be in operative communication with the components 410-450 via a bus 401 or similar communication coupling. The processor 402 may effect initiation and scheduling of the processes or functions performed by electrical components 410-450.

In yet further related aspects, the apparatus 400 may include a radio transceiver component 403. A standalone receiver and/or standalone transmitter may be used in lieu of or in conjunction with the transceiver 403. The apparatus 400 may also include a network interface 405 for connecting to one or more other communication devices or the like. The apparatus 400 may optionally include a component for storing information, such as, for example, a memory device/component 404. The computer readable medium or the memory component 404 may be operatively coupled to the other components of the apparatus 400 via the bus 401 or the like. The memory component 404 may be adapted to store computer readable instructions and data for affecting the processes and behavior of the components 410-450, and subcomponents thereof, or the processor 402, or the methods disclosed herein. The memory component 404 may retain instructions for executing functions associated with the components 410-450. While shown as being external to the memory 404, it is to be understood that the components 410-450 can exist within the memory 404. It is further noted that the components in FIG. 4 may comprise processors, electronic devices, hardware devices, electronic sub-components, logical circuits, memories, software codes, firmware codes, etc., or any combination thereof. Persons skilled in the art will appreciate that the functionalities of each component of apparatus 400 can be implemented in any suitable component of the system or combined in any suitable manner.

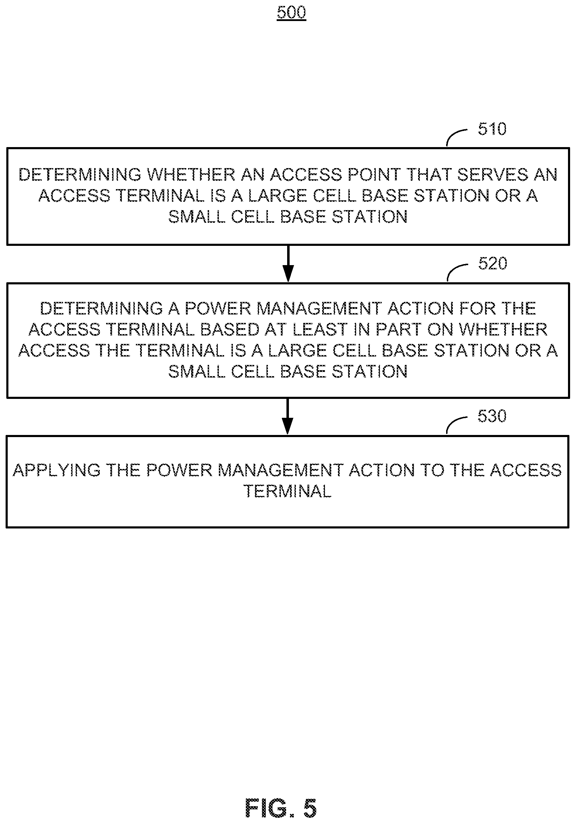

In accordance with one or more aspects of the examples described herein, with reference to FIG. 5, there is shown a methodology 500 for optimizing resource usage based on channel conditions and power consumption. The method may be operable, such as, for example, by the access terminal 150, as shown in FIG. 1C, or the like.

The method 500 may involve, at 510, determining whether an access point that serves an access terminal is a large cell base station or a small cell base station. In an example implementation, the cell characteristic determination component 154 of the access terminal 150 may determine whether the access point 160 is a large cell or a small cell, as shown in FIG. 1C.

The method 500 may involve, at 520, determining a power management action for the access terminal based at least in part on whether access the terminal is a large cell base station or a small cell base station. In an example implementation, the access terminal 150 may determine a power management action to be implemented by the power settings controller 156 or the antenna controller 158, as shown in FIG. 1C.

The method 500 may involve, at 530, applying the power management action to the access terminal. The power settings controller 156 or the antenna controller 158 may adjust settings according to the determined power management action, as shown in FIG. 1C.

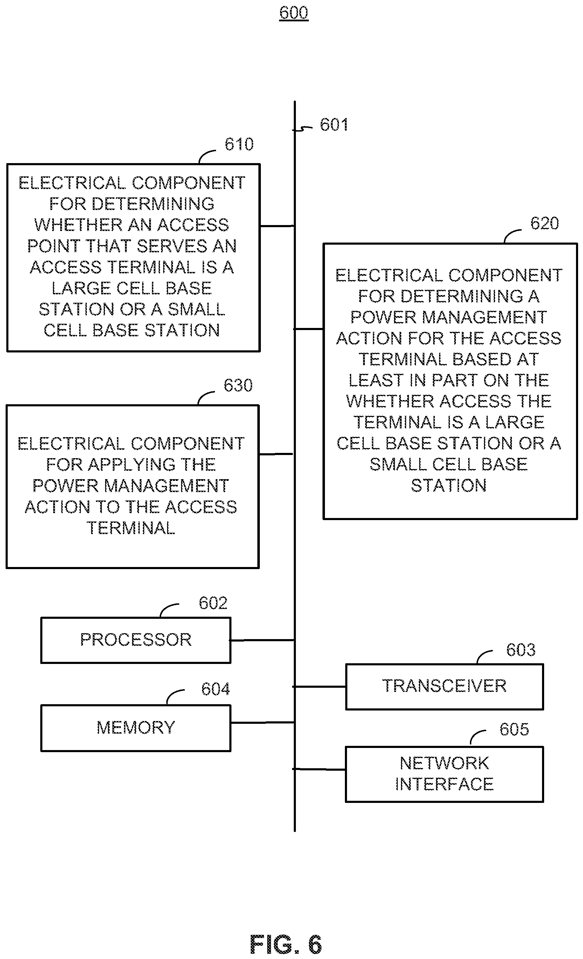

In accordance with one or more aspects of the examples described herein, FIG. 6 shows an example of an apparatus for optimizing resource usage based on channel conditions and power consumption, in accordance with the methodology of FIG. 5.

In one example, apparatus 600 may include an electrical component or module 610 for performing a power management action for the access terminal based at least in part on whether the access point is a large cell base station or a small cell base station.

The apparatus 600 may include an electrical component 620 for determining a power management action for the access terminal based at least in part on whether access the terminal is a large cell base station or a small cell base station.

The apparatus 600 may include an electrical component 630 for applying the power management action to the access terminal.

For the sake of conciseness, the rest of the details regarding apparatus 600 are not further elaborated on; however, it is to be understood that the remaining features and aspects of the apparatus 600 are substantially similar to those described above with respect to apparatus 400 of FIG. 4. Persons skilled in the art will appreciate that the functionalities of each component of apparatus 600 can be implemented in any suitable component of the system or combined in any suitable manner.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The operations of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a non-transitory computer-readable medium. Non-transitory computer-readable media includes both computer storage media and communication media including any medium that facilitates transfer of a computer program from one place to another. A storage media may be any available media that can be accessed by a general purpose or special purpose computer. By way of example, and not limitation, such computer-readable media can include RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Disk and disc, as used herein, includes compact disc (CD), laser disc, optical disc, digital versatile disc (DVD), floppy disk and blue ray disc where disks usually reproduce data magnetically, while discs reproduce data optically with lasers. Combinations of the above should also be included within the scope of non-transitory computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein, but is to be accorded the widest scope consistent with the principles and novel features disclosed herein.

## Claims

1. A method of wireless communication by a network entity, comprising:
detecting (310) a first channel condition for a first radio access technology, RAT, used by the network entity when communicating with a first access point;
detecting (320) a second channel condition for a second RAT used by the network entity when communicating with a second access point, wherein said network entity is concurrently communicating with said first and second access points;
determining (330) whether the first channel condition comprises a higher interference level than the second channel condition;
determining (340) power consumption constraints; and
reassigning (350) at least one antenna from the first RAT to the second RAT based at least in part on the power consumption constraints, in response to determining that the first channel condition comprises a higher interference level than the second channel condition.

2. The method of claim 1, wherein the power consumption constraints is at least one constraint selected from the group consisting of a current battery level and antenna power amplifier capabilities.

3. The method of claim 1, wherein reassigning comprises maximizing data throughput.

4. The method of claim 1, wherein reassigning comprises minimizing power consumption.

5. The method of claim 1, wherein the network entity comprises an access terminal.

6. A wireless communication apparatus (110), comprising:
at least one processor configured to:
detect (310) a first channel condition for a first radio access technology, RAT, used by said apparatus when communicating with a first access point;
detect (320) a second channel condition for a second RAT used by the apparatus when communicating with a second access point, wherein said apparatus is concurrently connected to said first and second access point;
determine (330) whether the first channel condition includes a higher interference level than the second channel condition;
determine (340) power consumption constraints;
determine (350) a number of antennas currently used by the first RAT to reassign for use by the second RAT, in response to determining that the first channel condition includes a higher interference level than the second channel condition; and
reassign the determined number of antennas from the first RAT to the second RAT.

7. The wireless communication apparatus of claim 6, wherein the power consumption constraints is at least one constraint selected from the group consisting of a current battery level and antenna power amplifier capabilities.

8. The wireless communication apparatus of claim 6, wherein the at least one processor is configured to reassign the antennas in order to maximize throughput over a time period.

9. The wireless communication apparatus of claim 8, wherein the at least one processor is configured to reassign the antennas in order to maximize throughput over a time period, in response to the power consumption constraints indicating a high current battery level.

10. The wireless communication apparatus of claim 6, wherein the at least one processor is configured to reassign the antennas in order to minimize power consumption.

11. The wireless communication apparatus of claim 10, wherein the at least one processor is configured to reassign the antennas in order to minimize power consumption, in response to the power consumption constraints indicating a low current battery level.

## Patentansprüche

1. Ein Verfahren zur Drahtloskommunikation durch eine Netzwerkeinheit, das Folgendes aufweist:
Detektieren (310) eines ersten Kanalzustandes für eine erste Funkzugriffstechnologie bzw. RAT (RAT = radio access technology), die durch eine Netzwerkeinheit verwendet wird, wenn sie mit einem ersten Zugriffspunkt kommuniziert;
Detektieren (320) eines zweiten Kanalzustandes für eine zweite RAT, die durch die Netzwerkeinheit verwendet wird, wenn sie mit einem zweiten Zugriffspunkt kommuniziert, wobei die Netzwerkeinheit gleichzeitig mit dem ersten und zweiten Zugriffspunkt kommuniziert;
Bestimmen (330), ob der erste Kanalzustand einen höheren Interferenzpegel aufweist als der zweite Kanalzustand;
Bestimmen (340) von Leistungsverbrauchsbeschränkungen; und
Neuzuweisen (350) wenigstens einer Antenne von der ersten RAT zu der zweiten RAT basierend wenigstens teilweise auf den Leistungsverbrauchsbeschränkungen ansprechend auf Bestimmen, dass der erste Kanalzustand einen höheren Interferenzpegel aufweist als der zweite Kanalzustand.

2. Verfahren nach Anspruch 1, wobei die Leistungsverbrauchsbeschränkungen eine Beschränkung sind, die aus der Gruppe ausgewählt ist, die aus einem aktuellen Batteriepegel und Antennenleistungsverstärkerfähigkeiten besteht.

3. Verfahren nach Anspruch 1, wobei das Neuzuweisen Maximieren von Datendurchsatz aufweist.

4. Verfahren nach Anspruch 1, wobei das Neuzuweisen Minimieren von Leistungsverbrauch aufweist.

5. Verfahren nach Anspruch 1, wobei die Netzwerkeinheit ein Zugriffsendgerät aufweist.

6. Eine Drahtloskommunikationsvorrichtung (110), die Folgendes aufweist:
wenigstens einen Prozessor, der konfiguriert ist zum:
Detektieren (310) eines ersten Kanalzustandes für eine erste Funkzugriffstechnologie bzw. RAT (RAT = radio access technology), die durch die Vorrichtung verwendet wird, wenn sie mit einem ersten Zugriffspunkt kommuniziert;
Detektieren (320) eines zweiten Kanalzustandes für eine zweite RAT, die durch die Vorrichtung verwendet wird, wenn sie mit einem zweiten Zugriffspunkt kommuniziert, wobei die Vorrichtung gleichzeitig mit dem ersten und zweiten Zugriffspunkt kommuniziert;
Bestimmen (330), ob der erste Kanalzustand einen höheren Interferenzpegel aufweist als der zweite Kanalzustand;
Bestimmen (340) von Leistungsverbrauchsbeschränkungen; und
Bestimmen (350) einer Anzahl von Antennen, die gleichzeitig durch die erste RAT verwendet werden zum Neuzuweisen zur Verwendung durch die zweite RAT, ansprechend auf Bestimmen, dass der erste Kanalzustand einen höheren Interferenzpegel aufweist als der zweite Kanalzustand; und
Neuzuweisen der bestimmten Anzahl von Antennen von der ersten RAT zu der zweiten RAT.

7. Drahtloskommunikationsvorrichtung nach Anspruch 6, wobei die Leistungsverbrauchsbeschränkungen wenigstens eine Beschränkung sind, die aus der Gruppe ausgewählt ist, die aus einem aktuellen Batteriepegel und Antennenleistungsverstärkerfähigkeiten besteht.

8. Drahtloskommunikationsvorrichtung nach Anspruch 6, wobei der wenigstens eine Prozessor konfiguriert ist zum Neuzuweisen der Antennen zum Maximieren von Durchsatz über eine Zeitperiode.

9. Drahtloskommunikationsvorrichtung nach Anspruch 8, wobei der wenigstens eine Prozessor konfiguriert ist zum Neuzuweisen der Antennen zum Maximieren von Durchsatz über eine Zeitperiode ansprechend darauf, dass die Leistungsverbrauchsbeschränkungen einen hohen aktuellen Batteriepegel anzeigen.

10. Drahtloskommunikationsvorrichtung nach Anspruch 6, wobei der wenigstens eine Prozessor konfiguriert ist zum Neuzuweisen der Antennen zum Minimieren von Leistungsverbrauch.

11. Drahtloskommunikationsvorrichtung nach Anspruch 10, wobei der wenigstens eine Prozessor konfiguriert ist zum Neuzuweisen der Antennen zum Minimieren von Leistungsverbrauch ansprechend darauf, dass die Leistungsverbrauchsbeschränkungen einen niedrigen aktuellen Batteriepegel anzeigen.

## Revendications

1. Procédé de communication sans fil par une entité de réseau, comprenant les étapes consistant à :
détecter (310) une première condition de canal pour une première technologie d'accès radio, RAT, utilisée par l'entité de réseau quand elle communique avec un premier point d'accès ;
détecter (320) une seconde condition de canal pour une seconde RAT utilisée par l'entité de réseau quand elle communique avec un second point d'accès, ladite entité de réseau communiquant simultanément avec lesdits premier et second points d'accès ;
déterminer (330) si la première condition de canal comprend un plus grand niveau d'interférence que la seconde condition de canal ;
déterminer (340) des contraintes de consommation électrique ; et
réaffecter (350) au moins une antenne de la première RAT à la seconde RAT sur la base, au moins en partie, des contraintes de consommation électrique, en réponse à la détermination que la première condition de canal comprend un plus grand niveau d'interférence que la seconde condition de canal.

2. Procédé selon la revendication 1, dans lequel les contraintes de consommation électrique sont au moins une contrainte sélectionnée dans le groupe constitué d'un niveau de batterie actuel et de capacités d'amplification de puissance d'antenne.

3. Procédé selon la revendication 1, dans lequel la réaffectation comprend l'étape consistant à maximiser un débit de données.

4. Procédé selon la revendication 1, dans lequel la réaffectation comprend l'étape consistant à minimiser une consommation électrique.

5. Procédé selon la revendication 1, dans lequel l'entité de réseau comprend un terminal d'accès.

6. Appareil de communication sans fil (110), comprenant :
au moins un processeur configuré pour :
détecter (310) une première condition de canal pour une première technologie d'accès radio, RAT, utilisée par ledit appareil quand il communique avec un premier point d'accès ;
détecter (320) une seconde condition de canal pour une seconde RAT utilisée par l'appareil quand il communique avec un second point d'accès, ledit appareil étant connecté simultanément auxdits premier et second points d'accès ;
déterminer (330) si la première condition de canal inclut un plus grand niveau d'interférence que la seconde condition de canal ;
déterminer (340) des contraintes de consommation électrique ;
déterminer (350) un nombre d'antennes actuellement utilisées par la première RAT pour les réaffecter en vue de leur utilisation par la seconde RAT, en réponse à la détermination que la première condition de canal inclut un plus grand niveau d'interférence que la seconde condition de canal ; et
réaffecter le nombre déterminé d'antennes de la première RAT à la seconde RAT.

7. Appareil de communication sans fil selon la revendication 6, dans lequel les contraintes de consommation électrique sont au moins une contrainte sélectionnée dans le groupe constitué d'un niveau de batterie actuel et de capacités d'amplification de puissance d'antenne.

8. Appareil de communication sans fil selon la revendication 6, dans lequel l'au moins un processeur est configuré pour réaffecter les antennes afin de maximiser un débit sur une période de temps.

9. Appareil de communication sans fil selon la revendication 8, dans lequel l'au moins un processeur est configuré pour réaffecter les antennes afin de maximiser un débit sur une période de temps, en réponse aux contraintes de consommation électrique indiquant un niveau de batterie actuel élevé.

10. Appareil de communication sans fil selon la revendication 6, dans lequel l'au moins un processeur est configuré pour réaffecter les antennes afin de minimiser une consommation électrique.

11. Appareil de communication sans fil selon la revendication 10, dans lequel l'au moins un processeur est configuré pour réaffecter les antennes afin de minimiser une consommation électrique, en réponse aux contraintes de consommation électrique indiquant un niveau de batterie actuel faible.
